# EUROPEAN PATENT SPECIFICATION

(11) **EP 3 144 220 B1**
(45) Date of publication and mention of the grant of the patent: **27.11.2019**
(21) Application number: 16187065.4
(22) Date of filing: 12.08.2013
(51) Int. Cl.: B64C 13/28, F16H 1/46

(54) **AIRCRAFT CONTROL SURFACE ACTUATOR**
STELLANTRIEB FÜR DIE STEUERFLÄCHE EINES FLUGZEUGES
ACTIONNEUR DE GOUVERNE DE COMMANDE D'AÉRONEF

(30) Priority: 22.08.2012 GB 201214952
(43) Date of publication of application: 22.03.2017
(62) Divisional of application: 13750123.5
(73) Proprietor: Moog Wolverhampton Limited, Wolverhampton, West Midlands WV9 5GB (GB)
(72) Inventor: DAVIES, Jonathan, Stafford, Staffordshire ST18 9EL (GB)
(74) Representative: Jones, John Bryn

(56) References cited:
- EP-A2- 1 524 188
- WO-A1-00/29286
- US-A- 5 120 285
- US-A1- 2004 200 928
- US-A1- 2010 125 380

## Description

The present invention is concerned with an aircraft control surface actuation assembly. More specifically, the present invention is concerned with an electrically powered actuation assembly for the actuation of primary aircraft control surfaces, in particular ailerons.

Many aircraft use hydraulically powered control surface actuation assemblies to move the primary control surfaces such as ailerons. Two linear hydraulic servo-actuators per aileron surface are often provided (for example on the Airbus A320 (RTM)). Each linear hydraulic servo-actuator comprises a separate hydraulic ram to move the aileron surface. The motion of each ram is controlled by a valve module comprising a servo-valve. The servo-actuators form separate load paths from the wing structure to the aileron to provide mechanical redundancy should one servo-actuator experience problems.

Each linear hydraulic servo-actuator is powered by an independent hydraulic supply to provide redundancy should one of the supplies experience a problem, e.g. pressure loss. In normal use the hydraulic control surface actuation assembly operates with one active and one standby linear hydraulic servo-actuator. The standby linear hydraulic servo-actuator can take over should the active linear hydraulic servo-actuator not perform as desired- in other words redundancy is provided in such a system in order to achieve operational and safety requirements.

During normal operation, the standby linear hydraulic servo-actuator is placed in a hydraulic bypass mode, to allow it to be back driven more easily. This reduces the burden on the active linear hydraulic servo-actuator, and therefore the size of hydraulic ram cylinder required.

In the extremely unlikely event that both hydraulic supplies to the linear hydraulic servo-actuator suffer operating problems, one or both of the linear hydraulic servo-actuators can be switched into a mode in which they act as dampers to damp free movement of the aileron surface.

Undamped free movement, or "flutter" detrimentally affects the aerodynamic performance of the aircraft in these circumstance, and as such having a damping mode is beneficial.

It will be noted that the known system provides damping functionality via either linear hydraulic servo-actuator, meaning that there is damping redundancy. This is necessary as either of the servo-actuators could suffer a problem, and require the load path from the remaining linear hydraulic servo-actuator (acting as a damper) to the used. In these circumstances, the damping capability is maintained to mitigate the flutter case.

It is increasingly common in the aircraft industry to consider electric actuation. One approach to providing electric actuation is to replace the above described linear hydraulic servo-actuator with rotary electric actuators. Due to their size, low torque, high speed electric motors are desirable. This necessitates the provision of a gearbox within the actuator, the gearbox having a relatively high gear ratio (several hundreds to one) to provide a relatively low speed, high torque output suitable for control surface actuation. An example of an electromechanical actuation system is described in EP1524188 A2.

Although simply replacing two linear hydraulic servo-actuator with two electric actuators per control surface would provide all of the aforementioned advantages of redundancy in the electrical power supply, the motors, and the gearboxes, there is a problem with this approach.

As mentioned above with respect to the hydraulic system, the active unit must be able to back drive the standby unit. In the case of the linear hydraulic servo-actuators, it is easy to place the standby servo-actuator into hydraulic bypass to reduce the burden on the active servo-actuator. The problem with the electric system is the gearbox ratio. The armature of the standby motor when directly back-driven presents little resistance. However, because the active motor has to drive the standby motor interia reflected through a high gear ratio, the power requirement to overcome the inertia of the standby motor armature is now substantial.

It should be noted that the same magnified inertia of the standby motor would be advantageous in terms of damping- should there be a problem with electrical supplies to both motors, they can act as inertial dampers, thus avoiding panel flutter.

The problem is that because there is no equivalent to the bypass mode of the linear hydraulic servo-actuator, both electric motors have to be oversized in order to back drive the inertia of the other during normal use, which adds weight and cost to the system.

Such bypass functionality could conceivably be implemented by mechanically disengaging the standby electric actuator, however such a system would add complexity, unreliability and cost to the system.

It is desirable to reduce the cost and weight of the control surface actuation assembly without reducing the reliability of such a system.

Planetary gearboxes are suitable for the above mentioned electric actuator, due to their potentially high gear ratios and compact size. The necessary gear ratio can be achieved by means of two planetary gearbox stages. In the first stage, an input sun gear drives a series of planet gears on a planet carrier, which in turn drive the sun gear of a second stage. The second stage comprises a planetary arrangement with spreader rings to position the multiple planets (instead of a planet carrier). The planetary arrangement is configured to drive an output ring gear.

One problem with such gearboxes is the measurement of position or velocity at the output ring gear. Ring gears are of a large radius, and positioning a resolver to be driven by the ring gear causes design and packaging problems because of the ring gear radius.

The planetary gearbox output would have output arm connected to the ring gear, and extending radially therefrom. For the range of movement required by the actuator, this can be problematic, as a large circumferential slot has to be provided in the gearbox housing to allow the arm to move. Such a slot is usually provided at a split line separating two parts of the housing, for ease of assembly. This is a problem because the larger the slot, the lower the stiffness of the gearbox housing to which various gears (such as the planet gears) are earthed. The housing typically has to endure large forces both from the gear arrangement and from external loading, and therefore providing features which allow the housing to deform should be avoided..

It is an aim of the present invention to overcome or at least mitigate the above mentioned problems.

According to the invention, there is provided an aircraft control surface actuator comprising a planetary gearbox assembly having an input sun gear, an intermediate planetary gear on a planet carrier driven by the sun gear, and, an output ring gear driven by the intermediate planetary gear, and a position transducer having a rotary input, in which the rotary input is driven by the planet carrier via a resolver drive arm.

Advantageously, providing the position of the transducer having a take off from the planet gear means that it can lie close to the central axis of the planetary gear arrangement. This is advantageous as it overcomes the problems with attempting to engage the resolver with the ring gear. The planet gears are positioned radially inwardly of the ring gear, and are accessible. For example, an arm mounted for rotation about the centre of the processing planet gears can be used as an input to the rotary transducer. A suitable calculation can be made in order to convert the position / velocity of the planet carrier to that of the output ring gear (as the gear ratio is known).

Preferably, the rotary input of the position transducer is concentric with an axis of procession of the planet gear. More preferably, the position transducer is positioned at least partially within a volume defined by the procession of the planetary gear. The rotary input of the position transducer may engage with a drive formation of the drive arm oriented radially with respect to the procession of the planetary gear.

Preferably the drive arm is engaged with the planet gear to permit relative radial motion but not relative circumferential motion. Advantageously, the planet gears are thereby free to move radially, thus reducing radial forces on the arm and the transducer. A radial slot may be provided in the arm, engaged by a projection from the planet gear to achieve this.

More than one drive arm may be provided to a plurality of planet gears.

Advantageously, by allowing the position resolver to engage with the planet gear set, it can be inserted within the gearbox arrangement, and even within a recess within the volume defined by the procession of the planetary set. This makes for a much more compact arrangement and also acts to protect the position resolver from external forces and contaminants.

An aircraft control surface assembly and an actuator according to the present invention will now be described with reference to the following drawings:-
FIGURE 1 is a schematic plan view of part of an aircraft wing comprising a prior art hydraulic primary control surface actuation assembly;
FIGURE 2 is a plan view of part of an aircraft wing comprising an electrically powered primary control surface actuation assembly;
FIGURE 3 shows a plan view of part of an aircraft wing comprising an electrically powered primary control surface actuation assembly;
FIGURE 4a is a schematic view of a first control system for actuation of the assembly of Figure 3;
FIGURE 4b is a schematic view of a second, alternative, control system for actuation of the assembly of Figure 3;
FIGURE 5 is a schematic of the gearbox arrangement used in the assembly according to Figure 3;
FIGURE 6a is a side section view of the actuator used in the assembly of Figure 3;
FIGURE 6b is a detail view of area B Figure 6a; and
FIGURE 7 is an end view of the actuator of Figure 6a.

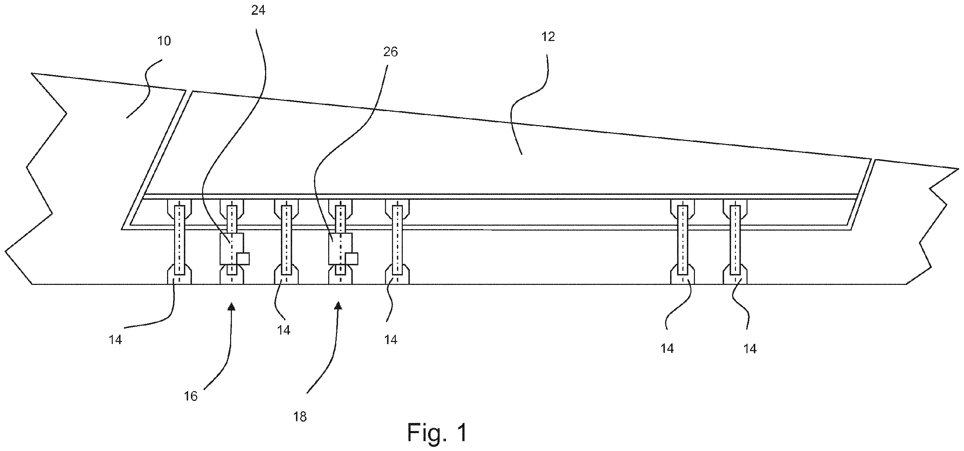

Turning to Figure 1, a part of an aircraft wing 10 is shown to which an aileron panel 12 is movably mounted. The aileron panel 12 is attached to the wing 10 via five mechanical link assemblies 14, being spaced apart and configured to allow articulation of the aileron 12 through a predetermined range of motion, to control the aerodynamic properties of the wing in flight.

A first hydraulic servo-actuator 16 and a second hydraulic servo-actuator 18 are provided and are configured to move the aileron panel 12 relative to the wing 10. Each servo-actuator 16, 18 is powered by a respective hydraulic ram 24, 26, each of which is fed by a separate and independent hydraulic supply (not shown).

In use, the hydraulic servo-actuators 16, 18 are in an active / standby control mode. In other words, the first hydraulic servo-actuator 16 powers the aileron panel 12 for movement in response to commands from the flight control computer. During such actuation, the second hydraulic servo-actuator 18 is placed in standby mode whereby the hydraulic ram 26 is in a bypass mode to provide as little resistance to panel movement as possible. Therefore the first ram 24 does not have to provide significant additional power to back drive the second ram 26.

Should there be a problem with (i) the hydraulic supply powering the ram 24, (ii) the ram 24 itself or (iii) the mechanical connection from the output of the ram 24 to the panel 12, then the standby hydraulic servo-actuator 18 can be used instead.

Should a problem occur with both of the hydraulic servo-actuators 16, 18, then damping of the aileron panel 12 relative to the wing 10 is provided by the inherent resistance of the rams 24, 26, through their respective mechanical attachments to the panel 12. This avoids uncontrolled flutter of the aileron panel 12. Such damping will also occur if the mechanical attachment of one of the hydraulic servo-actuators 16, 18 can no longer transfer load to and from the panel 12.

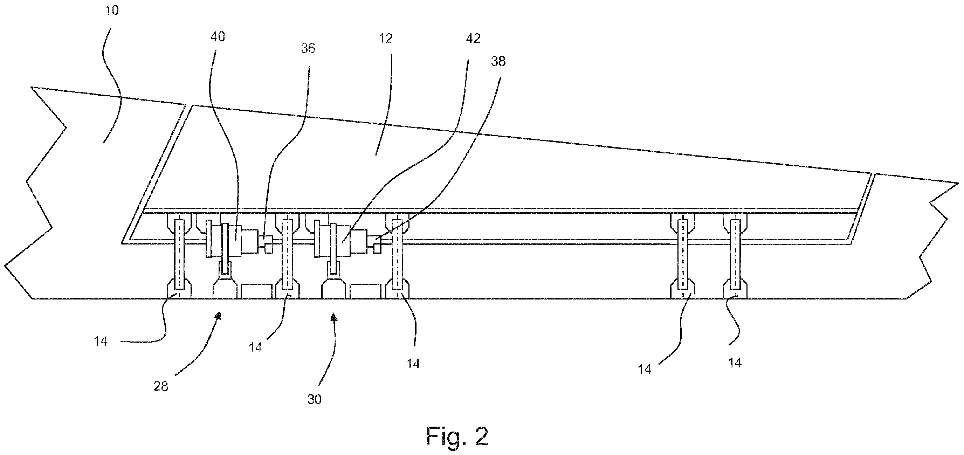

Turning to Figure 2, a conversion from a hydraulic to an electrical system is shown.

The wing 10 and aileron panel 12 are joined by five mechanical link assemblies 14, per Figure 1.

A first rotary electric actuator 28 and a second rotary electric actuator 30 are provided. Each actuator 28, 30 comprises a first and second electric motor 36, 38 respectively. Each motor is driven by a separate electric power supply (not shown). Each actuator 28, 30 comprises a respective reduction gearbox 40, 42 which converts the high speed, low torque output of the electric motors 36, 38 to a low speed, high torque output suitable for moving the aileron panel 12 with respect to the wing 10.

Like the system of Figure 1, the actuators 28, 30 operate in an active / standby mode. The first actuator 28 normally drives the aileron 12 with the second actuator assembly 30 in standby.

Redundancy is provided with respect to (i) the electrical supply, (ii) the motors themselves and (iii) the actuators.

The system of Figure 2 suffers from the inherent problems discussed in the introduction.

The system of Figure 2 has inherent inertial damping properties due to the inertial damping of the motors through their respective gearboxes. If no drive is available, for example through an interruption in both electrical supplies (assuming both actuators were functioning) flutter would not result because the inertia of the motor armatures through the respective gearboxes damps motion of the panel 12. It will also be noted that damping redundancy is also provided by the two assemblies 28, 30.

A problem with the arrangement of Figure 2 is that under normal use the first actuator 28 needs to back drive the second actuator 30. Although it is only the inertia of the armature of the armature of the motor 38 that needs to be overcome, this inertia is multiplied many times by the gearbox 42. This puts a significant burden on the active motor 36 and requires it to be significantly oversized for the application.

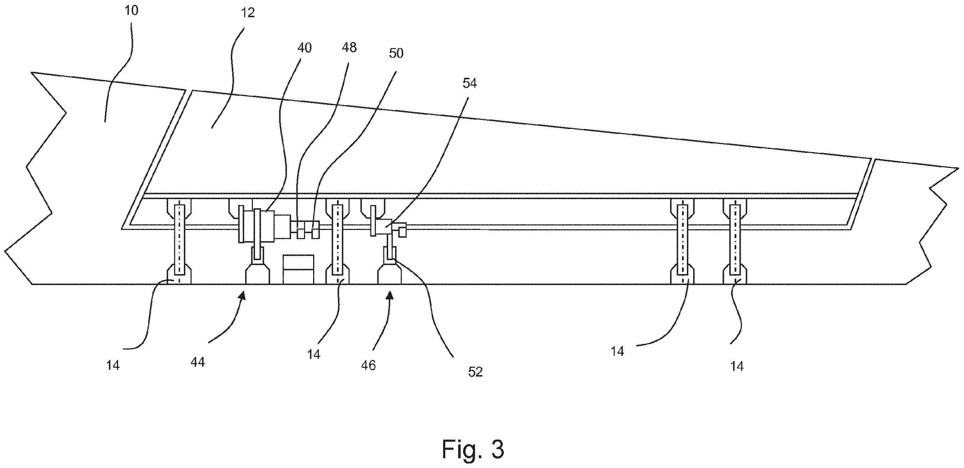

Figure 3 shows an assembly according to the present invention. The aileron 12 is connected to the wing 10 via four mechanical link assemblies 14. In addition, there is provided an rotary electric actuator 44 and a damping assembly 46, each providing individual and discrete load paths from the wing 10 to the aileron 12.

The actuator 44 is substantially similar to the actuator assembly 28 as shown in Figure 2, with the exception that a first electric motor 48 and a second electric motor 50 are provided in place of the single motor 36. Both motor armatures drive a common input shaft to the gearbox 40 of the actuator 44. As with the system of Figure 2, both motors 48, 50 are independently operable and powered by independent electrical supplies (not shown). Therefore electrical supply redundancy and motor redundancy are provided.

It will be noted that the motors 48, 50 are operated in an active / standby mode. In this case, if either motor needs to back drive the other, it can do so easily because the inertia is not amplified by a gearbox.

A dedicated damping assembly 46 is also provided, comprising a mechanical link 52 which is arranged to articulate with movement of the aileron 12 relative to the wing 10, and a dedicated damper 54 which is capable of damping motion between the wing 10 and the aileron 12 via movement of the link 52.

The damper 54 can be switched between a first mode, where its damping effect is negligible, and a second mode where its damping effect is significant. Therefore during normal operation of the actuator assembly 44, the movement of the aileron 12 is not significantly damped by the damper 54 (because it is in the first mode). Should a problem occur with the actuator 44, the damper 54 switches to the second mode to damp the aileron and reduce flutter of the aileron 12. Therefore during normal operation the actuator assembly 44 does not need to expend energy driving the damper 54.

The flight control computer (FCC) is used to switch the damper 54 between the first and second modes. The FCC can detect, for example, that control signals to both motors 48, 50 are having no effect on movement of the aileron 12 (because the FCC monitors aileron panel movement). This would be indicative of a malfunction.

A manual override is also provided so that the pilot can switch the damper 54 into the second mode. This is useful for a manual pre-flight check, in which the damper 54 can be placed in the second mode, and the aileron actuated by the motor 48 or motor 50. An increase in power drawn by the motor compared to having the damper 54 in the first mode indicates that the damper and control system is working satisfactorily. Under these circumstances, the panel 12 would be moved at the same speed in both tests. The current required by the driven motor would increase as the damper is switched into the second mode.

The FCC may be configured to carry out such a check after a predetermined number of flights since the last check. The intention is to avoid dormant failure.

The actuator 44 provides motor redundancy (because there are two motors) and electrical supply redundancy (because the motors are powered by independent supplies). The actuator 44 can also provide damping assuming that a mechanical link remains between the actuator and the panel 12 (due to the fact that the panel has to beackdrive the inertia of the motor armatures through the gearbox). In the event that the mechanical link between the actuator 44 and the panel 12 is broken, such that the actuator 44 can no longer provide damping, the damping assembly 46 can take over and mitigate the flutter case.

It will be noted that the damping assembly 46 is much smaller and less complex than the second actuator 30 of Figure 2, and in the embodiment of Figure 3 only a single gearbox 40 is required. Therefore cost and complexity is reduced.

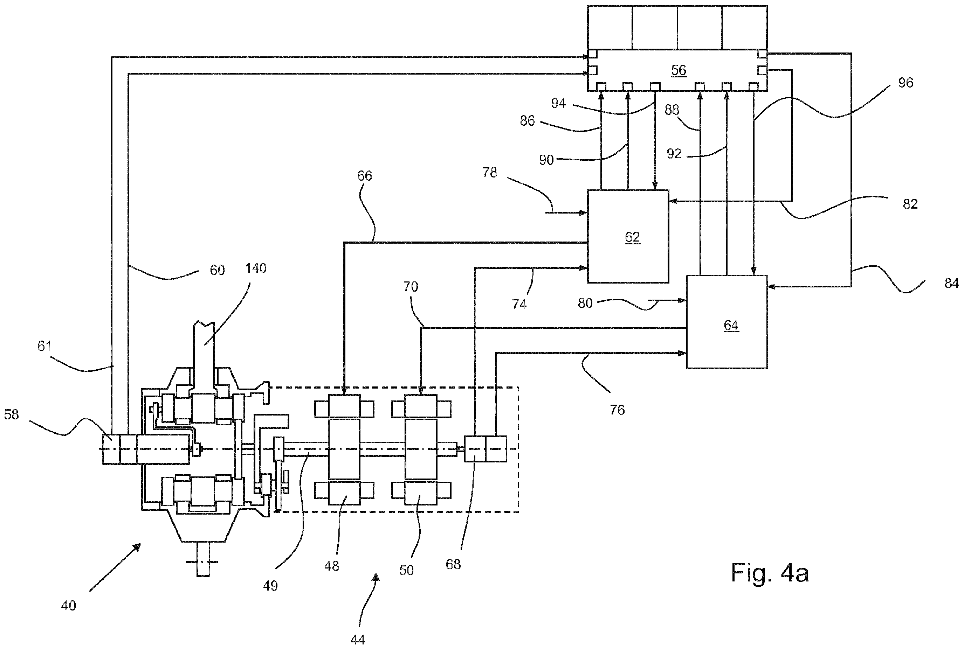

Turning to Figure 4a, a control system schematic for the actuator assembly 44 is shown. A flight control computer (FCC) 56 is configured to control movement of the aileron 12 in response to commands by the pilot or autopilot.

The actuator 44 comprises the motors 48, 50 mounted on a common input shaft 49 of the gearbox 40. A duplex position resolver 58 which has two output data connections 60, 61 into the flight control computer 56 is provided. As will be described below, the position resolver 58 is driven by a planet gear of the gearbox 40. The flight control computer 56 can thereby monitor the position of the aileron 12 relative to the wing 10. This is known as remote loop closure- i.e. the FCC is provided with feedback concerning the position of the aileron and can use this data to accurately control the aileron position as part of a closed-loop control system.

Two motor drive control units 62, 64 are provided. The motor drive control unit 62 is configured to receive power high voltage power (typically +/-270 Volts) from a power supply line 78 and provide power via a power output line 66 to the first electric motor 48. The motor drive control unit 64 is configured to receive power high voltage power (270 Volts) from a power supply line 80 and provide power via a power output line 70 to the second electric motor 50.

A duplex velocity resolver 68 is provided at the end of the shaft 49, providing a velocity signal representative of the speed of the motor armatures. The duplex velocity resolver 68, 72 provides data to the motor drive control units 62, 64 via data lines 74, 76 respectively.

It will be noted that the high voltage system is limited to the motor drive control unit / motor circuit. Each of the motor drive control units 62, 64 is enabled via low voltage control lines 82, 84 respectively received from the flight control computer 56.

The flight control computer 56 communicates directly with the motor drive control units 62, 64 using three data lines. The status data line 86, 88 for the first and second motor drive units 62, 64 respectively, provide diagnostic information to the flight control computer 56. The velocity data lines 90, 92 provide velocity information for each of the motors 48, 50 to the flight control computer 56, as gathered by the duplex transducer 68. Finally, two command lines 94, 96 provide command data from the flight control computer 56 to each of the motor drive units 62, 64 respectively. Each control line comprises a demand for panel movement. The FCC monitors the resulting movement via the duplex transducer 58.

The above described system can be configured for remote or local loop closure. In the above example, the outer position loop is closed by the flight control computer via the data line 60. The velocity loop is closed by the motor drive unit as provided by the input lines 74, 76, and the power lines 66, 70 respectively.

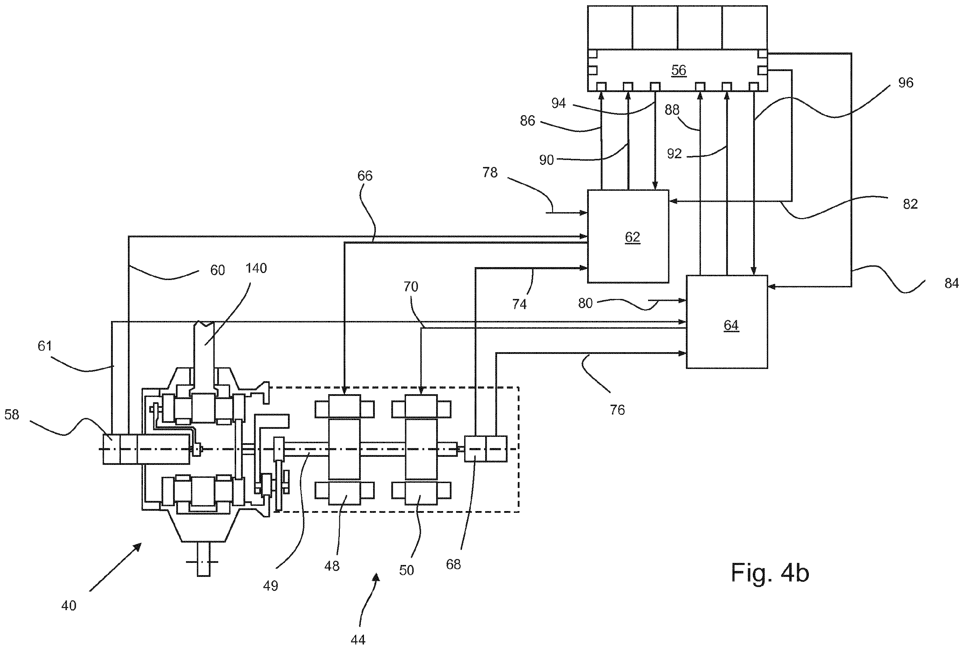

Turning to Figure 4b, remote loop closure is provided in which the position resolver reports to the MDUs (which are integral with the actuator 44) not the FCC. Therefore the FCC simply sends a demand signal via lines 94, 96, and the MDUs carry it out via local loop closure. The FCC may see an error signal should there be a problem with the MDUs or the actuator 44, but it otherwise transmits panel position demand signals without a feedback signal (the feeback loop and position control is carried out by the MDUs). The MDUs may be incorporated into the actuator to provide a "smart" actuator.

In both examples, two MDUs are provided for redundancy.

It is envisaged that both the MDUs 62, 64 and the motors 48, 50 could be combined into single "fault tolerant" MDU and motor units. The MDUs may be combined as long as the reliability of the combined unit has the same functionality as two units (i.e. redundancy). This may be achieved, for example, by using redundant circuits within the MDU.

Similarly, motors 48, 50 may be combined. For example, a combined motor may be provided as long as it has the equivalent or greater reliability than two motors. This may be achieved by splitting the motor coils into several different independent sub-coils.

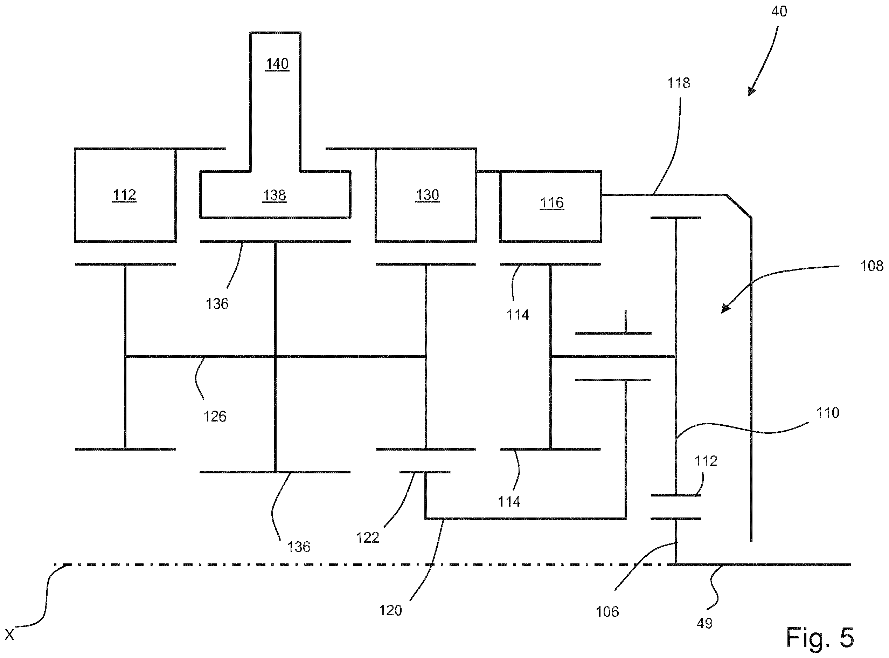

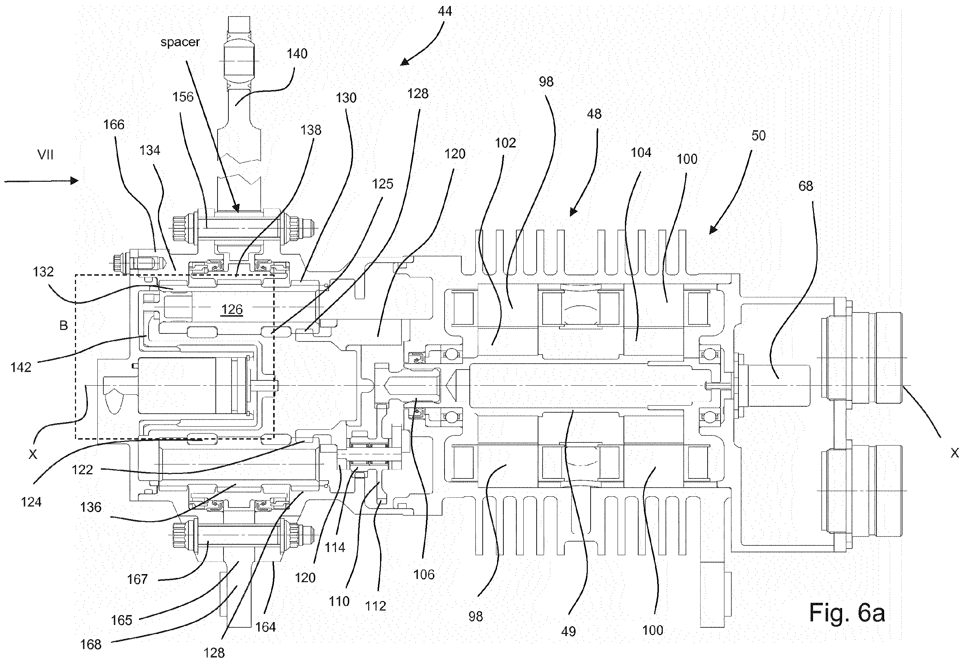

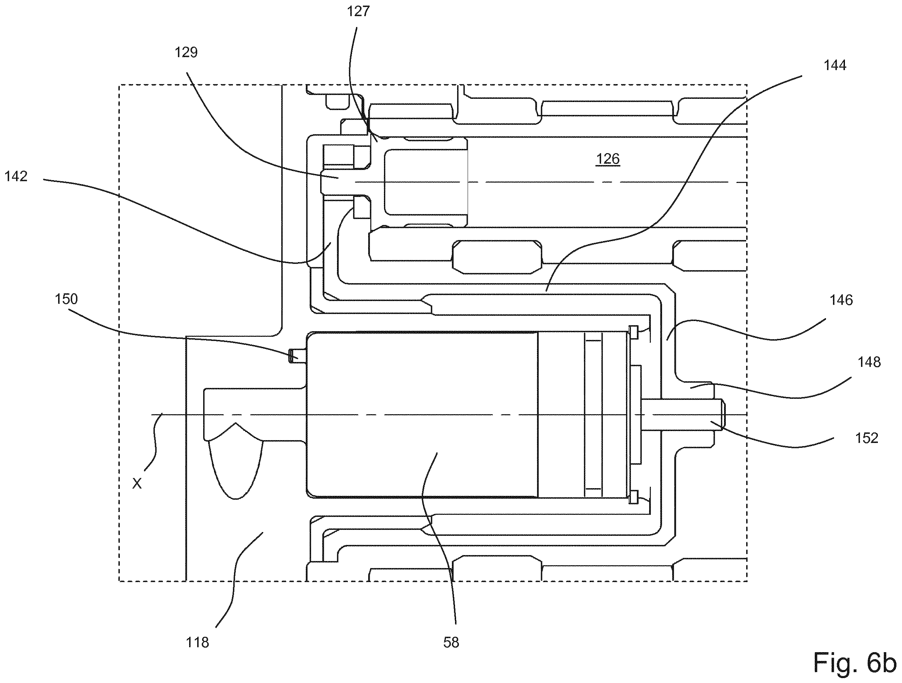

Turning to Figures 5, 6a and 6b, the actuator 44 (an in particular the gearbox 40) is shown in more detail. Figure 5 is a schematic view of the gearbox 40, whereas Figure 6a is a cross-section through a part of the actuator assembly 44.

Turning to Figure 6a, each of the motors 48, 50 comprises a series of motor windings 98, 100 respectively. Within each of the sets of windings there is provided a respective motor armature 102, 104. It will be understood that each of the motors 48, 50 is powered by a separate electric circuit.

Each of the motors 48, 50 is arranged to drive the common shaft 49. During normal operation, only one motor will drive (in accordance with the active / standby mode of operation). At a first end of the shaft 49 there is provided the duplex velocity resolver 68 which is arranged to determine the rotational speed of the shaft 49.

Referring to Figures 5 and 6a simultaneously, at the opposite end of the shaft 49 there is provided a spur gear 106, for transferring drive from the shaft 49. The shaft 49 and therefore the spur gear 106 are arranged to rotate about a central axis X of the gearbox 40. The spur gear 106 acts an input sun gear of a two-stage planetary gearbox, as will be described below.

The spur (input sun) gear 106 is engaged with, and arranged to drive a compound planetary input gear 108. The compound planetary input gear 108 comprises three individual planets 110. Each individual, unitary planet 110 comprises an input gear 112 and an output gear 114. The output gear 114 is arranged to engage with a static set of gear teeth 116 on a gearbox housing 118. The compound planetary input gear 108 is therefore grounded on the housing 118. As such, each of the planets 110 of the compound planetary input gear 108 processes around the central axis X on a first planet carrier 120.

The planet carrier 120 has an output gear 122 about the axis X, forming a sun gear. The output gear 122 meshes with a compound planetary ouput gear 124 comprising eight individual planets 126. The a compound planetary ouput gear 124 does not have a planet carrier, rather a pair of spreader rings 124, 125 being axially offset and providing a reaction to radial inward motion of the planets 126 (spreader rings not shown in Figure 5).

Each of the planets 126 comprises a first gear 126 which engages with both the sun gear (i.e., the output gear 122 of the planet carrier 120) and also with a static set of teeth 130 on the housing 118. At the opposite axial end of each of the planets 126, there is provided a further second set of gear teeth 132 which mesh with a further static set 134 on the housing 118. As such, each of the planets is grounded to the housing 118 at two spaced positions.

Between the spaced first and second sets of teeth 128, 132, there is provided an output tooth set 136 which meshes with a ring gear 138 providing an output to the actuation arm 140 which is configured to move the aileron panel 12.

Turning to Figure 6b, a resolver drive arm 142 is arranged to rotate about the axis X. Concentric with the axis X, the resolver drive arm 142 defines a cylindrical recess 144 having an end wall 146. The recess 144 extends through the centre point of the circular locus of the procession of the centres of the planet gears 126. The recess 144 overlaps with the planet gears 126 such that they are coplanar along at least part of their axial length. The end wall 146 comprises a drive formation 148 at its axial centre, in the form of a bore with a flat (other formations, such as splines are envisaged).

One of the planets (labelled 126 in Figure 6b) comprises an insert 127 having a pip 129 protruding axially therefrom. The pip 129 engages the end of the resolver drive arm 142 such that the resolver drive arm 142 rotates with the planet 126. The pip engages with the resolver drive arm 142 such that the planet 126 can move radially relative to the resolver drive arm 142, but not circumferentially. This is achieved by mating the pip 129 with a radial slot on the resolver drive arm 142. This eliminates any radial loads on the resolver drive arm 142 of the transducer 58.

The duplex position transducer 58 is housed within the recess 144 and an input shaft 152 of the position transducer 58 is engaged with the drive formation 148 on the resolver drive arm 142. The position resolver 58 is statically mounted within the housing 118 so that it cannot rotate, using an offset pin 150, therefore the input shaft is driven to determine the position of the resolver drive arm142 (and therefore the planet 126).

It will be noted that because the recess 144 is nested within the planet gears 126, the resolver 58 do not project far from the housing 118, forming a compact arrangement.

By using an appropriate calculation, the position of the output arm 140 can easily be determined. Because the gear ratio between the planets 126, and therefore the resolver drive arm 142 and the ring gear 138 is known, the position of the output arm 140 can be determined from the output of the duplex resolver 58.

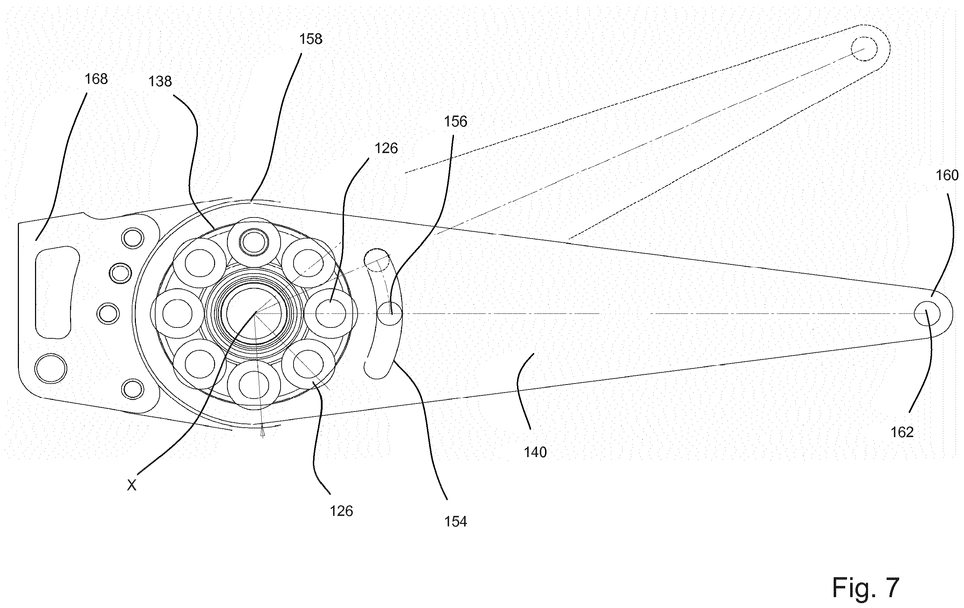

Turning to Figure 7, a view in direction VII in Figure 6a is shown. The arm 140 can clearly be seen in two positions of rotation about the axis X. The arm 140 defines the ring gear 138 at a first end 158. Each of the planet gear assemblies 126 of the output planet cluster 124 can also be seen. The arm 140 tapers from the first end 158 to a smaller second end 160 where a connection point 162 is established for driving connection to the rest of the actuator 44.

It will be noted that the arm 140 comprises a slot 154 outside the radius of the ring gear 138, the slot 154 being arcuate in nature.

Turning back to Figure 6a, the housing 118 has a first part 164 in which most of the gearbox 40 is contained. A second part 166 of the housing is bolted to the first part 164 via bolts 167. An intermediate spacer part 165 is provided between the parts 164, 166. The parts 164, 165, 166 together define a circle segment (i.e. part circumferential) slot to allow rotation of the arm 140 in use. A bolt 156 joining the parts 164, 166 passes through the arcuate slot 154. This is advantageous as the bolt 156 passing through the slot 154 in the arm 140 provides additional strength to the join between the parts of the hosing 164, 166. Further, the ends of the slot 154 provide a limit stop for the arm 140 such that its motion about the axis X is limited.

An attachment point 168 is provided in the intermediate spacer part 165 and is positioned substantially diametrically opposite the arm 140 in its centre position.

## Claims

1. An aircraft control surface actuator (44) comprising:
a planetary gearbox assembly (40) having:
an input sun gear (106),
an intermediate planetary gear (108) on a planet carrier (120) driven by the sun gear (106), and,
an output ring gear (138) driven by the intermediate planetary gear (108), and,
a position transducer (58) having a rotary input (152), **characterized in that** the rotary input (152) is driven by the planet carrier (120) via a resolver drive arm (142).

2. An aircraft control surface actuator (44) according to claim 1 in which the rotary input (152) of the position transducer (58) is concentric with an axis of procession of the planet gear (108).

3. An aircraft control surface actuator (44) according to claim 2 in which the position transducer (58) is positioned at least partially within a volume defined by the procession of the planetary gear (108).

4. An aircraft control surface actuator (44) according to claim 3 in which the rotary input (152) of the position transducer (58) engages with a drive formation of the drive arm oriented radially with respect to the procession of the planetary gear (108).

5. An aircraft control surface actuator (44) according to claim 4 in which the drive arm (142) is engaged with the planet gear (108) to permit relative radial motion but not relative circumferential motion.

6. An aircraft control surface actuator (44) according to claim 5 in which the drive arm (142) includes a radial slot that is configured to be engaged by a projection (129) from the planet gear (108), in use.

## Patentansprüche

1. Flugzeugsteuerflächen-Stellglied (44), umfassend:
eine Planetengetriebeanordnung (40) aufweisend:
ein Eingangssonnenrad (106),
ein Zwischenplanetenrad (108) auf einem Planetenträger (120), der durch das Sonnenrad (106) angetrieben wird, und
ein von dem Zwischenplanetenrad (108) angetriebenes Abtriebstellerrad (138), und
einen Positionsgeber (58) mit einem Dreheingang (152), **dadurch gekennzeichnet, dass** der Dreheingang (152) durch den Planetenträger (120) über einen Drehmelder-Antriebsarm (142) angetrieben wird.

2. Flugzeugsteuerflächen-Stellglied (44) nach Anspruch 1, in dem der Dreheingang (152) des Positionsgebers (58) konzentrisch mit einer Prozessionsachse des Planetenrads (108) ist.

3. Flugzeugsteuerflächen-Stellglied (44) nach Anspruch 2, in dem der Positionsgeber (58) zumindest teilweise innerhalb eines durch die Prozession des Planetenrads (108) definierten Volumens angeordnet ist.

4. Flugzeugsteuerflächen-Stellglied (44) nach Anspruch 3, in dem der Dreheingang (152) des Positionsgebers (58) mit einer radial zur Prozession des Planetenrads (108) ausgerichteten Antriebsanordnung des Antriebsarms in Eingriff steht.

5. Flugzeugsteuerflächen-Stellglied (44) nach Anspruch 4, in dem der Antriebsarm (142) mit dem Planetenrad (108) in Eingriff steht, um eine relative radiale Bewegung, aber keine relative Umfangsbewegung zuzulassen.

6. Flugzeugsteuerflächen-Stellglied (44) nach Anspruch 5, in dem der Antriebsarm (142) einen radialen Schlitz einschließt, der konfiguriert ist, um bei Verwendung mit einem Vorsprung (129) von dem Planetenrad (108) in Eingriff gebracht zu werden.

## Revendications

1. Actionneur de surface de commande d'aéronef (44) comprenant :
un ensemble de boîte de vitesses planétaire (40) ayant :
un engrenage planétaire d'entrée (106),
un engrenage planétaire intermédiaire (108) sur un porte-satellites (120) entraîné par l'engrenage planétaire (106), et,
une couronne de sortie (138) entraînée par l'engrenage planétaire intermédiaire (108), et,
un transducteur de position (58) ayant une entrée rotative (152), **caractérisé en ce que** l'entrée rotative (152) est entraînée par le porte-satellites (120) par l'intermédiaire d'un bras d'entraînement de résolveur (142).

2. Actionneur de surface de commande d'aéronef (44) selon la revendication 1 dans lequel l'entrée rotative (152) du transducteur de position (58) est concentrique avec un axe de mise en oeuvre de l'engrenage planétaire (108).

3. Actionneur de surface de commande d'aéronef (44) selon la revendication 2 dans lequel le transducteur de position (58) est positionné au moins partiellement dans un volume défini par la mise en œuvre de l'engrenage planétaire (108).

4. Actionneur de surface de commande d'aéronef (44) selon la revendication 3 dans lequel l'entrée rotative (152) du transducteur de position (58) s'engage avec une formation d'entraînement du bras d'entraînement orienté radialement par rapport à la mise en œuvre de l'engrenage planétaire (108).

5. Actionneur de surface de commande d'aéronef (44) selon la revendication 4 dans lequel le bras d'entraînement (142) est engagé avec l'engrenage planétaire (108) pour permettre un mouvement radial relatif mais pas un mouvement circonférentiel relatif.

6. Actionneur de surface de commande d'aéronef (44) selon la revendication 5 dans lequel le bras d'entraînement (142) comprend une fente radiale qui est configurée pour être engagée par une saillie (129) de l'engrenage planétaire (108), en utilisation.
